(19) Europäisches Patentamt
European Patent Office
Office européen des brevets

(11) **EP 3 234 309 B1**

(12) **FASCICULE DE BREVET EUROPEEN**

(45) Date de publication et mention
de la délivrance du brevet:
**17.10.2018 Bulletin 2018/42**

(21) Numéro de dépôt: **15828746.6**

(22) Date de dépôt: **17.12.2015**

(51) Int Cl.:
***F01D 5/08*** *(2006.01)*   ***F01D 11/00*** *(2006.01)*

(86) Numéro de dépôt international:
**PCT/FR2015/053597**

(87) Numéro de publication internationale:
**WO 2016/097632 (23.06.2016 Gazette 2016/25)**

(54) **ENSEMBLE DE TURBINE DE TURBOMACHINE D'AÉRONEF**

TURBINENANORDNUNG EINER STRÖMUNGSMASCHINE EINES FLUGZEUGES

TURBINE ASSEMBLY OF A TURBO-MACHINE OF AN AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.12.2014 FR 1462655**

(43) Date de publication de la demande:
**25.10.2017 Bulletin 2017/43**

(73) Titulaire: **SAFRAN AIRCRAFT ENGINES**
**75015 Paris (FR)**

(72) Inventeurs:
• **QUELVEN, Damien, Bernard**
**77550 Moissy-Cramayel (FR)**
• **DESFORGES, Jean-Baptiste, Vincent**
**77550 Moissy-Cramayel (FR)**
• **JUDET, Maurice, Guy**
**77550 Moissy-Cramayel (FR)**
• **TANG, Ba-Phuc**
**77550 Moissy-Cramayel (FR)**

(74) Mandataire: **Regimbeau**
**87 rue de Sèze**
**69477 Lyon Cedex 06 (FR)**

(56) Documents cités:
**EP-A1- 0 919 698   EP-A1- 1 450 005**

## Description

DOMAINE TECHNIQUE GENERAL

La présente invention concerne une turbine de turbomachine.

ETAT DE L'ART

Afin d'éjecter une quantité d'air suffisante en masse, un accroissement de la pression à vitesse constante est assuré par le compresseur d'entrée. Un important dégagement d'énergie est ensuite provoqué par la combustion d'un carburant, généralement du kérosène, dans l'oxygène de l'air qui traverse la machine.

Les turbomachines comprennent une turbine récupérant une partie de l'énergie dégagée par la combustion de carburant pour entraîner certains éléments tournants dont le compresseur situé au niveau de l'entrée d'air.

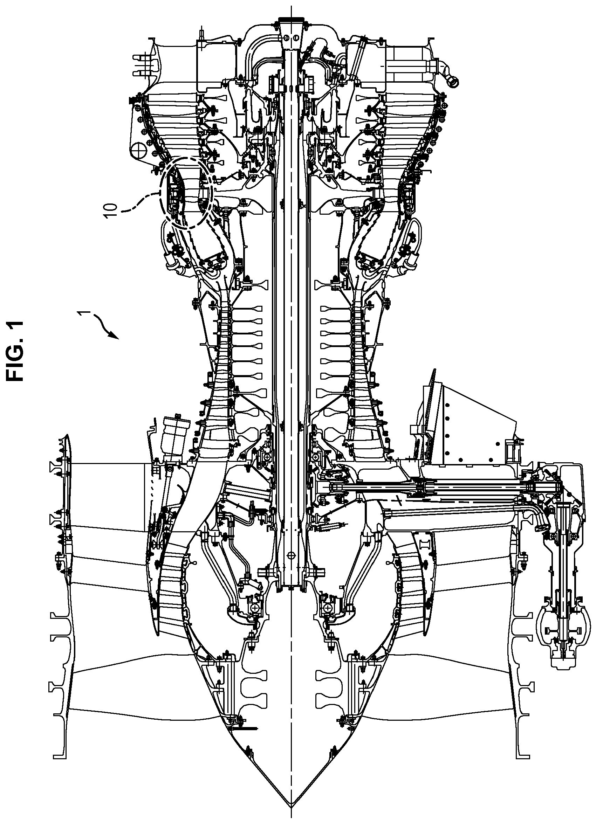

Dans les turbomachines à double flux du type de celui représenté sur la **figure 1**, la turbine est généralement constituée d'un ou plusieurs étages (stator-rotor) à haute pression (HP) et d'un ou plusieurs étages à basse pression (BP).

En particulier, on constate que dans les turbines HP, celles qui sont bi-étage sont parmi les plus performantes.

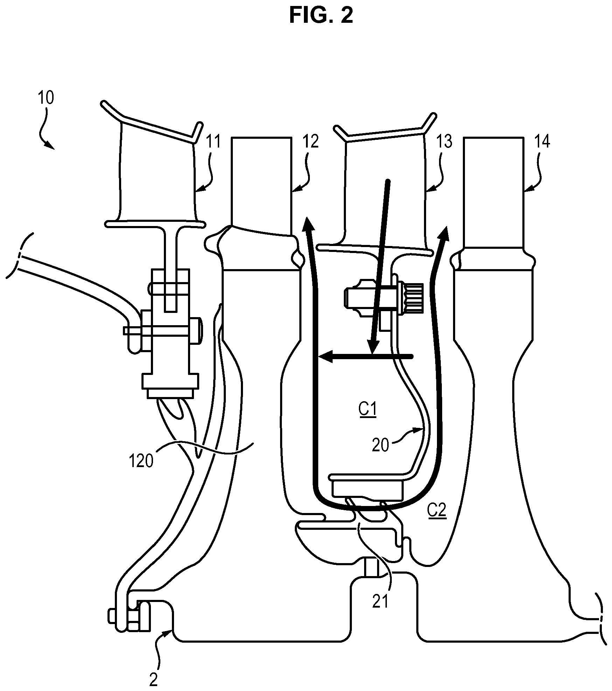

Toutefois, une problématique spécifique aux turbines, par exemple les turbines HP bi-étage, est la maitrise d'étanchéité entre les deux cavités interdisques. En référence à la **figure 2**, qui représente une turbine bi-étage 10 connue, on voit le premier étage formé d'un premier stator à aubes 11 (un redresseur) et d'un premier rotor à aubes 12 (une roue mobile), et le deuxième étage formé d'un deuxième stator à aubes 13 (un autre redresseur) et d'un deuxième rotor à aubes 14 (une autre roue mobile). L'ensemble des stators 11, 13 forme l'aubage fixe (les stators 11, 13 sont fixés à un carter de la turbomachine 1), et l'ensemble des rotors 12, 14 forme l'aubage mobile (les rotors 12, 14 sont montés sur un arbre 2).

Les deux cavités inter-disques mentionnées sont disposées de part et d'autre et du deuxième stator 13 : en amont de ce dernier (c'est-à-dire entre le premier rotor 12 et le deuxième stator 13) on trouve la première cavité C1, et en aval (c'est-à-dire entre le deuxième stator 13 et le deuxième rotor 14) on trouve la deuxième cavité C2.

La première cavité (ou cavité amont) C1 et la deuxième cavité (ou cavité aval) C2 sont séparées par une platine d'étanchéité (stator/capotage) 20 s'étendant de la plateforme du deuxième stator 13 (à laquelle la platine 20 est fixée) à l'arbre 2. La platine 20 est une plaque de forme sensiblement annulaire.

Dans un objectif de refroidissement, du fluide est injecté à travers la plateforme du deuxième stator 13, dans la première cavité C1, d'où il ressort par un interstice entre les plateformes du premier rotor 12 et du deuxième stator 13.

Toutefois, comme l'on voir toujours sur la figure 2, une part de ce fluide s'échappe au niveau du point de jonction entre la platine 20 et l'arbre 2, et rejoint la deuxième cavité C2, d'où il ressort par un interstice entre les plateformes du deuxième stator 13 et du deuxième rotor 14. Ce flux court-circuite le deuxième stator 13 et entraîne donc une légère perte de rendement.

Pour lutter contre ce phénomène, on a cherché à améliorer l'étanchéité au niveau du point de jonction entre la platine 20 et l'arbre 2 par exemple via l'ajout d'un joint labyrinthe 21. La maîtrise de l'étanchéité à ce niveau est toutefois complexe, dans la mesure où la platine 20 et l'arbre 2 sont mobiles l'un par rapport à l'autre.

L'invention vient améliorer la situation en résolvant de façon simple et efficace le problème d'étanchéité entre les deux cavités interdisques C1 et C2 EP0919698 A1 montre les caractéristiques techniques du préambule de la revendication indépendante 1.

PRESENTATION DE L'INVENTION

La présente invention propose un ensemble de turbine de turbomachine, comprenant au moins un premier rotor aubagé, un stator aubagé et un deuxième rotor aubage disposés successivement, les rotors étant montés sur un arbre, une platine d'étanchéité s'étendant entre le stator et l'arbre et séparant une première cavité disposée entre le premier rotor et le stator, d'une deuxième cavité disposée entre le stator et le deuxième rotor, des moyens de diminution de la pression étant positionnés au sein de la première cavité,

L'ensemble étant caractérisé en ce que les moyens de diminution de la pression comprennent une pluralité d'ailettes de recompression sensiblement radiales s'étendant dans la première cavité.

Par turbine, on considère ici en particulier toute turbine rapide pour lesquelles la maitrise d'étanchéité entre les deux cavités interdisques nécessite des efforts de conception et de fabrication. Par turbine rapide, on entend toute turbine fonctionnant à des pressions similaires à celles intervenant dans une turbine Haute Pression de turbomachine d'aéronef. Une telle turbine peut être qualifiée de turbine rapide en comparaison d'une turbine Haute Pression d'une turbomachine ayant également une turbine Basse Pression plus lente.

Selon d'autres caractéristiques avantageuses et non limitatives :

- lesdites ailettes sont disposées sur une face aval du premier rotor ;
- les ailettes sont disposées au niveau d'un amincissement du premier rotor ;
- le premier rotor comprend une pluralité de pales, l'ensemble de turbine comprenant une ailette pour chaque pale du premier rotor ;
- les ailettes présentent une extrémité distale recourbée ;

- lesdits moyens de diminution de la pression au sein de la première cavité comprennent en outre une platine d'étanchéité auxiliaire disposée dans la première cavité en regard des ailettes de recompression ;
- les ailettes et la platine d'étanchéité auxiliaire présentent une forme complémentaire ;
- les moyens de diminution de la pression au sein de la première cavité sont configurés pour diminuer d'au moins 50% un écart de pression entre la première cavité et la deuxième cavité ;
- les moyens de diminution de la pression au sein de la première cavité sont configurés pour diminuer d'au moins 90% l'écart de pression entre la première cavité et la deuxième cavité ;
- ledit stator aubagé est un deuxième stator, l'ensemble de turbine comprenant en outre un premier stator aubagé disposé en amont du premier rotor.
- la pression en amont du stator est supérieure à la en aval du stator.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 précédemment décrite représente une turbomachine connue ;
- la figure 2 précédemment décrite représente une turbine bi-étage selon l'art antérieur ;
- la figure 3a représente un détail d'un turbine bi-étage selon l'art antérieur ;
- la figure 3b représente un mode de réalisation d'une turbine selon l'invention ;
- les figures 4a-4b représentent des modes de réalisation d'un premier rotor d'une turbine selon l'invention.

DESCRIPTION DETAILLEE

*Etanchéité*

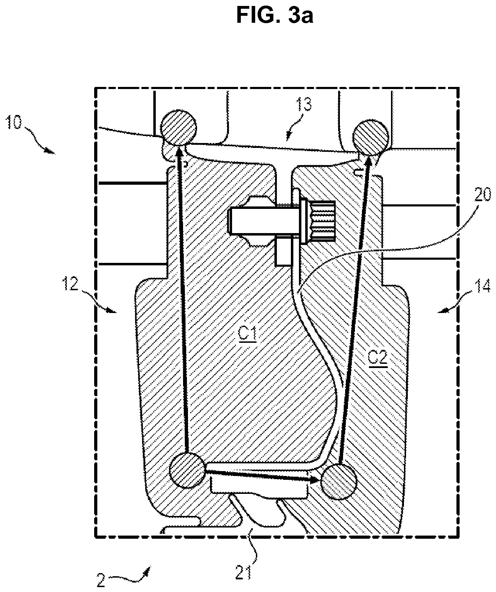

En référence à la **figure 3a**, la perméabilité de l'étanchéité inter-disques dépend largement de l'environnement en pression régnant dans les cavités interdisques C1 et C2, lequel est conditionné par le taux de détente dans la veine au passage du deuxième stator 13. En effet, par définition la pression diminue au niveau de chaque organe 11, 12, 13, 14 de la turbine, et notamment la pression en amont du deuxième stator 13 est ainsi inférieure à la pression en aval du deuxième stator 13. En pratique, la pression $P_{aval}$ en aval de ce deuxième stator 13 vaut environ 0.4 à 0.8 (avantageusement environ 0.5) fois celle $P_{amont}$ en amont du stator 13. Typiquement, $P_{amont}$ et $P_{aval}$ sont de l'ordre de quelques bar. Ce fort écart démultiplie la possibilité de fuites au niveau du joint labyrinthe 21.

Il est toujours possible d'améliorer les performances intrinsèques de cette étanchéité, mais des aspects tels que le jeu minimum montage, l'intégration de cartouches d'abradable de type NIDDA ou l'encombrement au sein de l'inter-disques, font qu'elle ne pourra jamais être parfaite.

La présente innovation propose de résoudre les problématiques de perméabilité inter-disques non pas en améliorant encore les performances d'étanchéité au niveau du joint 21, mais en agissant contre la cause de ce problème, à savoir la différence de pression entre les deux cavités C1 et C2.

Plus précisément, il est proposé un ensemble de turbine 10 de turbomachine 1, comprenant au moins un premier rotor aubagé 12, un stator aubagé 13 et un deuxième rotor aubage 14 disposés successivement. En pratique, le stator aubagé 13 est un deuxième stator (comme expliqué dans l'introduction), la turbine 10 comprenant en outre un premier stator 11 disposé en amont. Par « amont » ou « aval », on raisonne selon le sens de l'écoulement du fluide : en sortant de la chambre de compression, le fluide passera dans l'ordre au niveau du premier stator 11 puis du premier rotor 12, puis du deuxième stator 13 et enfin du deuxième rotor 14. Les premiers stator et rotor 11, 12 constituent un premier étage de turbine 10, et les deuxièmes stator et rotor 13, 14 constituent un deuxième étage. De façon préférée la turbine 10 est bi-étage, mais alternativement elle peut comprendre davantage d'étages.

On comprendra que seul le deuxième stator 13 est essentiel dans le cadre du présent ensemble du turbine 10, et on y fera référence dans la suite de la description comme « le stator » 13.

Les rotors 12, 14 sont montés sur un arbre 2. Ils présentent une pluralité de pales radiales s'étendant sur toute leur circonférence, à partir d'une plateforme, laquelle présente une paroi interne/externe contre laquelle l'air circule, définissant une veine.

En particulier, un rotor 12, 14 peut être monobloc (et ainsi supporter l'ensemble des pales de la pièce 1), ou formée d'une pluralité d'organes élémentaires chacun supportant une unique pale (un « pied » de la pale) de sorte à constituer une aube. On parle dans le premier cas de DAM (« Disque Aubagé Monobloc ») et dans le second cas de roue à aubes. Dans un cas comme dans l'aube, le rotor 12, 14 présente généralement un amincissement 120 sous sa plateforme (pour des questions de réduction de masse).

Dans le cas des stators 11 et 13, les pales sont fixées à un carter extérieur. Ils présentent une plateforme définissant une paroi radialement extérieure de la pièce 1 (le gaz passe à l'intérieur, les pales s'étendent vers le centre) et le cas échéant une paroi radialement intérieure de la pièce 1 (le gaz passe autour) en définissant un moyeu, comme pour un rotor 12, 14.

Les stators 11, 13 peuvent également être monoblocs ou non, et fixes ou à aubes mobiles.

Par ailleurs, une platine d'étanchéité 20 s'étend entre le stator 13 et l'arbre 2 et sépare la première cavité C1 disposée entre le premier rotor 12 et le stator 13, de la deuxième cavité C2 disposée entre le stator 13 et le deuxième rotor 14. Comme expliqué avant, il s'agit une plaque de forme sensiblement annulaire, généralement terminée par un joint d'étanchéité labyrinthique 21.

Et le présent ensemble de turbine 10 résout les problématiques de perméabilité inter-disques en ce qu'il comprend en outre des moyens 300, 31 de diminution de la pression au sein de la première cavité C1.

*Rééquilibrage des pressions*

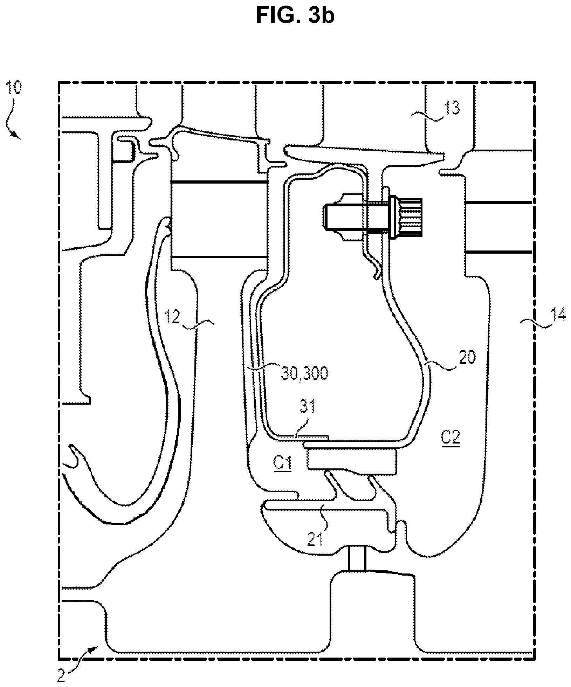

En référence à la **figure 3b**, les moyens 300, 31 de diminution de la pression au sein de la première cavité C1 entraînent l'abaissement de la pression au sein de la cavité C1 de *p* bar, et dans une bien moindre mesure celle au sein de la cavité C2 (de *p'* bar, avec *p* >> *p'*. A ce titre, dans la suite de la présente description on supposera *p'* nul). Il est à noter que dans la mesure où la pression dans chacune des cavités C1 et C2 peut ne pas être uniforme, par « pression au sein de la première cavité C1 » et « pression au sein de la deuxième cavité C2 » on entendra les pressions dans la partie la plus centrale de chaque cavité, respectivement de part et d'autre du joint labyrinthe 21.

En reprenant les exemples précédents, on obtient des pressions respectives (lorsque les moyens 300, 31 sont actifs) de $P_{C1} = P_{amont}$ - $X$ et $P_{C2} = P_{aval}$.

Le différentiel de pression $\Delta$ entre les deux cavités C1 et C2 (i.e. le gradient de pression aux bornes du joint labyrinthe 21) descend de $\Delta_i = P_{amont}$ - $P_{aval}$ à $\Delta_f = P_{C1}$ - $P_{C2} = P_{amont}$ - $P_{aval}$ - $X$ < $P_{amont}$ - $P_{aval}$ = $\Delta_i$.

De façon préférée, la diminution de pression est telle que l'on diminue notablement le delta de pressions, i.e. que l'on tend vers un équilibrage des pressions de la première cavité C1 et de la deuxième cavité C2, i.e. $\Delta_f \rightarrow$ 0, i.e. $X \rightarrow P_{amont}$ - $P_{aval}$.

Ainsi, les moyens 300, 31 de diminution de la pression au sein de la première cavité C1 sont avantageusement configurés de telle sorte que le différentiel de pression $\Delta$ est au moins divisé par deux (i.e. $\Delta_f \leq 0.5\Delta_i$, c'est-à-dire $X \geq 0.5$ x ($P_{amont}$ - $P_{aval}$)), voire au moins divisé par dix (i.e. $\Delta_f \leq 0.1\Delta_i$, c'est-à-dire $X \geq 0.9$ x ($P_{amont}$ - $P_{aval}$)).

La réduction voire l'annulation du différentiel de pression entre les premières et deuxième cavités C1, C2 réduit voire rend caduc la problématique d'étanchéité : si les pressions sont égales, il n'y a plus de flux de la première cavité C1 vers la deuxième cavité C2 quand bien même l'étanchéité est imparfaite.

On comprendra que de nombreux modes de réalisation des moyens 300, 31 de diminution de la pression au sein de la première cavité C1 sont possibles, à commencer par une aspiration mécanique au sein de la première cavité C1.

De façon préférée, l'on utilise une pluralité d'ailettes de recompression 300 qui reproduit l'effet d'un compresseur centrifuge « local », telle que représentée sur la figure 3b.

*Compresseur centrifuge*

Un compresseur centrifuge est un mécanisme qui entraîne en rotation autour de l'axe 2 le fluide, et par conséquence entraîne par force centrifuge le transfert forcé de fluide du fond de la cavité C1 (le centre) vers le haut (l'extérieur, au niveau de la jonction avec la veine), i.e. son déplacement radial. Cela génère ainsi un gradient de pression.

Plus précisément, on rappelle que pour un système fluide en rotation, la loi d'équilibre statique des pressions est donnée par l'équation :

$$\frac{dP}{dr} = \rho w_{air}{}^2 r = \rho K e^2 w_{rotor}{}^2 r$$

Avec :

$\rho$ : masse volumique de l'air en kg/m$^3$

$r$ : rayon en m

$w_{air}$ : vitesse de rotation de l'air en rad/s

$W_{rotor}$ : vitesse de rotation d'un solide en rad/s

$Ke$ :

$$\text{Coefficient d'entrainement} = \frac{w_{air}}{w_{rotor}}$$

Le compresseur centrifuge crée ainsi par mise en rotation du fluide un gradient de pression adverse équilibrant l'effet centrifuge dans la première cavité qui est maximisé lorsque *Ke* est maximisé.

On comprendra ainsi qu'un compresseur, bien qu'étant par définition un équipement destiné à entraîner une hausse de pression en une zone donnée (ici la jonction entre la cavité C1 et la veine au niveau de l'amont du stator 13), a également toujours pour effet d'entrainer une diminution de pression dans une autre zone (ici au sein de la cavité C1, i.e. le plus au centre) où le fluide est « pompé ». L'utilisation d'un compresseur comme moyen de diminution de pression peut ainsi sembler paradoxale mais ne pose pas de problème.

*Ailettes*

De façon préférée, l'effet d'un compresseur centrifuge est obtenu par une pluralité d'ailettes de recompression 300 sensiblement radiales s'étendant dans la première cavité C1. En d'autres termes, les moyens 300, 31 de diminution de la pression comprennent ladite pluralité d'ailettes de recompression 300.

Dans la mesure où le premier rotor 12 constitue déjà un solide en rotation de la cavité C1, il suffit de disposer les ailettes 300 sur une face aval du premier rotor 12. Ainsi, la rotation du rotor 12 entraîne naturellement et automatiquement l'effet recherché de compression centrifuge et de diminution de pression au sein de la première cavité C1. Les ailettes 300 sont configurées pour maximiser le coefficient Ke.

On notera qu'il est déjà connu de disposer des ailettes de recompression dans une turbine, mais jamais dans la première cavité C1, encore moins sur la face aval du premier rotor 12 et *a fortiori* pas dans un but de diminution de la pression au sein de la première cavité C1.

Par exemple la demande US 4759688 propose des ailettes de recompression en regard de la face amont du premier rotor. De telles ailettes (dont on notera qu'elles sont solidaires du stator) servent uniquement à pomper du fluide en vue de favoriser la circulation de fluide dans le premier rotor et donc son refroidissement. Elles n'ont rien à voir avec les présentes ailettes 300 qui tournent avec le premier rotor 12.

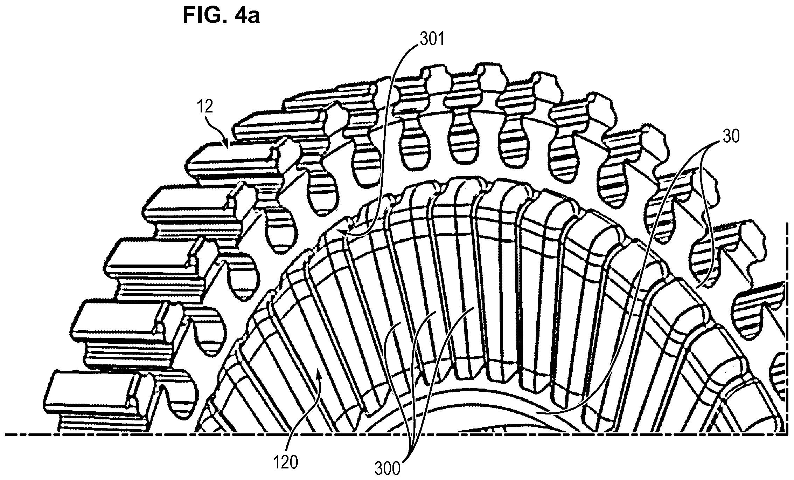

En référence à la **figure 4a** qui représente le rotor 12, les ailettes 300 sont préférentiellement disposées au niveau de l'amincissement 120 du premier rotor 12. A l'extrémité de cet amincissement, les ailettes 300 présentent une extrémité distale 301 recourbée. Il est souhaitable de continuer ces ailettes 300 le plus proche de la veine.

Une telle configuration est préférée dans le cas d'une ventilation dite par le rotor 12 (c'est-à-dire au fond de la première cavité C1) ou d'une ventilation par le stator 13 (telle qu'évoquée dans l'introduction). En effet les ailettes 300 sont ici directement en sortie des trous d'alimentation (pour refroidissement) du premier rotor 12 (à côté du joint labyrinthe 21). Le rayon de sortie des ailettes 300 résulte d'un compromis masse/tenue Mécanique/gain de performance.

Alternativement, dans le cas d'une ventilation dite « par le fond d'alvéole », c'est-à-dire sous la plateforme du premier rotor, il est souhaitable positionner les ailettes 300 plus haut que l'amincissement 120, i.e. à partir du rayon du fond d'alvéole jusqu'à la veine pour conserver Ke=1 lors de la remontée, afin de limiter les pertes de charges d'entrée dans les « conduites » générées par les ailettes.

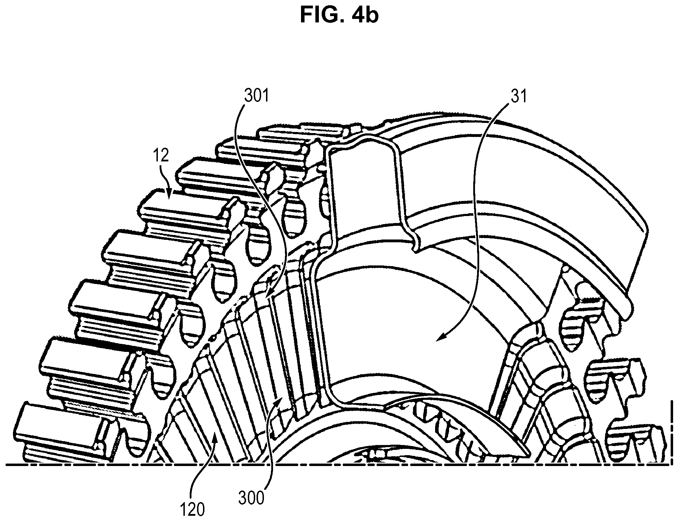

Dans tous les cas, il est préférable qu'il y ait autant d'ailettes 300 que de pales autour du rotor 12 (i.e. de trous si comme sur la figure 4 le rotor est une roue apte à recevoir les pales, qui sont séparées). Par ailleurs il est préférable que la section de passage radiale soit grande (limitation des pertes de charges), et que les ailettes 300 soient peu épaisse (limitation du rajout de masse).

On note que l'ajout d'ailettes 300 va diminuer les coefficients d'échanges entre l'air et le premier rotor 12 (Ke est le plus près possible de 1 donc la vitesse tangentielle relative est quasiment nulle entre le disque du rotor 12 et le fluide), ce qui entraîne une baisse de la « sensibilité » du rotor à la température de l'air sur la face aval, ce qui rend possible :

- un pilotage de la thermique du premier rotor 12 ;
- une diminution du gradient thermique axial en cas d'éventuelles ailettes de recompression supplémentaires sur sa face amont, d'où une baisse du déversement disque et amélioration du jeu rotor/stator.

Par ailleurs, les ailettes 300 augmentent le temps de réponse premier rotor 12, ce qui permet un ralentissement du premier rotor 12 en phase d'accélération et de décélération, d'où une diminution des pics de consommation de jeu rotor/stator, et une baisse du risque d'usure associé.

*Platine auxiliaire*

Pour amplifier leur effet, les ailettes 300 peuvent être accompagnées d'une platine d'étanchéité auxiliaire 31 disposée dans la première cavité C1 en regard desdites ailettes 300. Une telle platine auxiliaire 31, visible sur la figure 3b et **la figure 4b**, diminue l'entrefer, réduit les pertes de charge, et permet de faire tendre plus facilement Ke vers 1 (puisque le fluide est contraint de tourner à la vitesse du premier rotor 12).

**Revendications**

1. Ensemble de turbine (10) de turbomachine (1) d'aéronef, comprenant au moins un premier rotor aubagé (12), un stator aubagé (13) et un deuxième rotor aubagé (14) disposés successivement, les rotors (12, 14) étant montés sur un arbre (2), une platine d'étanchéité (20) s'étendant entre le stator (13) et l'arbre (2) et séparant une première cavité (C1) disposée entre le premier rotor (12) et le stator (13), d'une deuxième cavité (C2) disposée entre le stator (13) et le deuxième rotor (14), des moyens (300, 31) de diminution de la pression étant positionnés au sein de la première cavité (C1), **caractérisé en ce que** lesdits moyens (300, 31) de diminution de la pression comprennent une pluralité d'ailettes de recompression (300) sensiblement radiales s'étendant dans la première cavité (C1).

2. Ensemble selon la revendication 1, dans lequel lesdites ailettes (300) sont disposées sur une face aval du premier rotor (12).

3. Ensemble selon la revendication 2, dans lequel les ailettes (300) sont disposées au niveau d'un amincissement (120) du premier rotor (12).

4. Ensemble selon l'une des revendications 2 et 3, dans lequel le premier rotor (12) comprend une pluralité de pales, l'ensemble de turbine (10) comprenant une ailette (300) pour chaque pale du premier rotor (12).

5. Ensemble selon l'une des revendications 2 à 4, dans lequel les ailettes (300) présentent une extrémité distale (301) recourbée.

6. Ensemble selon l'une des revendications 1 à 5, dans lequel lesdits moyens (300, 31) de diminution de la pression au sein de la première cavité (C1) comprennent en outre une platine d'étanchéité auxiliaire (31) disposée dans la première cavité (C1) en regard des ailettes de recompression (300).

7. Ensemble selon les revendications 1 et 6 en combinaison, dans lequel les ailettes (300) et la platine d'étanchéité auxiliaire (31) présentent une forme complémentaire.

8. Ensemble selon l'une des revendications 1 à 7, dans lequel les moyens (300, 31) de diminution de la pression au sein de la première cavité (C1) sont configurés pour diminuer d'au moins 50% un écart de pression entre la première cavité (C1) et la deuxième cavité (C2).

9. Ensemble selon la revendication 8, dans lequel les moyens (300, 31) de diminution de la pression au sein de la première cavité (C1) sont configurés pour diminuer d'au moins 90% l'écart de pression entre la première cavité (C1) et la deuxième cavité (C2).

10. Ensemble selon l'une des revendications 1 à 8, dans lequel ledit stator aubagé (13) est un deuxième stator, l'ensemble de turbine comprenant en outre un premier stator aubagé (11) disposé en amont du premier rotor (12).

11. Ensemble selon l'une quelconque des revendications précédentes, dans laquelle la pression en amont du stator (13) est supérieure à la pression en aval du stator (13).

**Patentansprüche**

1. Turbinenanordnung (10) einer Strömungsmaschine (1) eines Flugzeugs, umfassend wenigstens einen ersten beschaufelten Rotor (12), einen beschaufelten Stator (13) und einen zweiten beschaufelten Rotor (14), die sukzessive angeordnet sind, wobei die Rotoren (12, 14) auf einer Welle (2) angeordnet sind, wobei sich eine Abdichtungsplatine (20) zwischen dem Stator (13) und der Welle (2) erstrecken und eine erste Ausnehmung (C1), die zwischen dem ersten Rotor (12) und dem Stator (13) angeordnet sind, von einer zweiten Ausnehmung (C2), die zwischen dem Stator (13) und dem zweiten Rotor (14) angeordnet ist, trennen, wobei Druckminderungsmittel (300, 31) innerhalb der ersten Ausnehmung (C1) positioniert sind, **dadurch gekennzeichnet, dass** die genannten Druckminderungsmittel (300, 31) eine Vielzahl von deutlich radialen Verdichtungsrippen (300) umfassen, die sich in der ersten Ausnehmung (C1) erstrecken.

2. Anordnung gemäß Anspruch 1, in der die genannten Rippen (300) auf einer dem ersten Rotor (12) nachgeschalteten Seite angeordnet sind.

3. Anordnung gemäß Anspruch 2, in der die Flügel (300) an einer Verdünnung (120) des ersten Rotors (12) angeordnet sind.

4. Anordnung gemäß einem der Ansprüche 2 und 3, in der der erste Rotor (12) eine Vielzahl von Rotorblättern umfasst, wobei die Turbinenanordnung (10) eine Rippe (300) für jedes Rotorblatt des ersten Rotors (12) umfasst.

5. Anordnung gemäß einem der Ansprüche 2 bis 4, in der die Rippen (300) ein gekrümmtes, distales Ende (301) aufweisen.

6. Anordnung gemäß einem der Ansprüche 1 bis 5, in der die genannten Druckminderungsmittel (300, 31) innerhalb der ersten Ausnehmung (C1) darüber hinaus eine Hilfs-Abdichtungsplatine (31) umfassen, die in der ersten Ausnehmung (C1) gegenüber den Verdichtungsrippen (300) angeordnet ist.

7. Anordnung gemäß Anspruch 1 und 6 in Kombination, in der die Rippen (300) und die Hilfs-Abdichtungsplatine (31) eine komplementäre Form aufweisen.

8. Anordnung gemäß einem der Ansprüche 1 bis 7, in der die Druckminderungsmittel (300, 31) innerhalb der ersten Ausnehmung (C1) konfiguriert sind, um eine Druckdifferenz zwischen der ersten Ausnehmung (C1) und der zweiten Ausnehmung (C2) um wenigstens 50 % zu mindern.

9. Anordnung gemäß Anspruch 8, in der die Druckminderungsmittel innerhalb der ersten Ausnehmung (C1) konfiguriert sind, um die Druckdifferenz zwischen der ersten Ausnehmung (C1) und der zweiten Ausnehmung (C2) um mindestens 90 % zu mindern.

10. Anordnung gemäß einem der Ansprüche 1 bis 8, in der der genannte beschaufelte Stator (13) ein zweiter Stator ist, wobei die Turbinenanordnung darüber hinaus einen ersten beschaufelten Stator (11) umfasst, der dem ersten Rotor (12) vorgeschaltet angeordnet ist.

**11.** Anordnung gemäß irgendeinem der voranstehenden Ansprüche, in der der Druck vor dem Stator (13) höher ist als der Druck nach dem Stator (13).

**Claims**

**1.** A turbine assembly (10) for an aircraft turbine engine (1), comprising at least a first bladed rotor (12), a bladed stator (13) and a second bladed rotor (14) arranged successively, the rotors (12, 14) being mounted on a shaft (2), a sealing plate (20) extending between the stator (13) and the shaft (2) and separating a first recess (C1) arranged between the first rotor (12) and the stator (13), from a second recess (C2) arranged between the stator (13) and the second rotor (14), pressure-reducing means (300, 31) being positioned inside the first recess (C1) **characterized in that** said pressure-reducing means (300, 31) comprise a plurality of substantially radial recompression fins (300) extending into the first recess (C1).

**2.** The assembly according to claim 1, wherein said fins (300) are arranged on a downstream face of the first rotor (12).

**3.** The assembly according to claim 2, wherein the fins (300) are arranged at a thinned portion (120) of the first rotor (12).

**4.** The assembly according to one of claims 2 and 3, wherein the first rotor (12) comprises a plurality of blades, the turbine assembly (10) comprising one fin (300) for each blade of the first rotor (12).

**5.** The assembly according to one of claims 2 to 4, wherein the fins (300) have a curved distal end (301).

**6.** The assembly according to one of claims 1 to 5, wherein said pressure-reducing means (300, 31) inside the first recess (C1) also comprise an auxiliary sealing plate (31) arranged into the first recess (C1) facing the recompression fins (300).

**7.** The assembly according to claims 1 and 6 in combination, wherein the fins (300) and the auxiliary sealing plate (31) have a complementary shape.

**8.** The assembly according to one of claims 1 to 7, wherein the pressure-reducing means (300, 31) inside the first recess (C1) are configured to reduce by at least 50% a pressure difference between the first recess (C1) and the second recess (C2).

**9.** The assembly according to claim 8, wherein the pressure-reducing means (300, 31) inside the first recess (C1) are configured to reduce by at least 90% the pressure difference between the first recess (C1) and the second recess (C2).

**10.** The assembly according to one of claims 1 to 8, wherein the bladed stator (13) is a second stator, the turbine assembly also comprising a first bladed stator (11) arranged upstream of the first rotor (12).

**11.** The assembly according to one of the preceding claims, wherein the pressure upstream of the stator (13) is greater than the pressure downstream of the stator (13).

# FIG. 2

# FIG. 3a

# FIG. 3b

FIG. 4a

# FIG. 4b

## RÉFÉRENCES CITÉES DANS LA DESCRIPTION

### Documents brevets cités dans la description

- EP 0919698 A1
- US 4759688 A